(19) Europäisches Patentamt
European Patent Office
Office européen des brevets

(11) **EP 2 019 528 B1**

(12) **EUROPEAN PATENT SPECIFICATION**

(45) Date of publication and mention
of the grant of the patent:
**01.07.2026 Bulletin 2026/27**

(21) Application number: **08012444.9**

(22) Date of filing: **09.07.2008**

(51) International Patent Classification (IPC):
*H04L 27/26* (2006.01)   *H04L 5/00* (2006.01)
*H04W 88/06* (2009.01)

(52) Cooperative Patent Classification (CPC):
**H04L 27/2602; H04L 5/0007; H04L 5/0044;
H04L 5/0048; H04L 27/2603;** H04L 5/1469

(54) **Method and module for constructing a frame structure in communication systems**

Verfahren und Modul zur Konstruktion einer Rahmenstruktur in Kommunikationssystemen

Procédé et module de construction d'une structure de cadre dans des systèmes de communication

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.07.2007 US 929798 P
07.07.2008 US 168846**

(43) Date of publication of application:
**28.01.2009 Bulletin 2009/05**

(73) Proprietor: **STC.UNM
Albuquerque, NM 87102 (US)**

(72) Inventors:
• **Hsieh, Yu-Tao
Hsinchu City 300 (TW)**
• **Ting, Pang-An
Fongyuan City
Taichung County 420 (TW)**
• **Hsu, Jen-Yuan
Kinmen County 893 (TW)**
• **Wang, Chih-Kai
Taichung City 407 (TW)**

(74) Representative: **Lermer, Christoph
LermerRaible Patent- u. Rechtsanwalts
PartGmbB
Seidlstraße 5
80335 München (DE)**

(56) References cited:
**US-A1- 2005 113 026    US-A1- 2005 180 361
US-A1- 2005 190 724    US-A1- 2006 002 361**

• **MARK CUDAK MOTOROLA MICHAEL WEBB
BRN PHOENIX INC PHIL ORLIK MITSUBISHI
ELECTRIC RESEARCH LABORATORIES AVI
FREEDMAN HEXAGON SYSTEM: "Combined
Draft IEEE 802.16m Requirements (For
Information Only)", IEEE DRAFT;
C80216M-07_058, IEEE-SA, PISCATAWAY, NJ
USA, vol. 802.16m, 6 March 2007 (2007-03-06),
pages 1 - 64, XP068000517, [retrieved on
20070306]**

## Description

CROSS REFERENCE TO RELATED APPLICATIONS

This application claims the benefit of U.S. Provisional Application No. 60/929,798, filed July 12, 2007.

BACKGROUND OF THE INVENTION

The present invention relates to a module for constructing a frame for communication in a communication system and to methods for constructing a frame structure in a communication system.

Orthogonal Frequency Division Multiple Access (OFDMA) is a multiple access scheme for transmitting data in different subcarriers in a channel, wherein the data may come from different users and may be transmitted in disjoint subsets of sub-channels in a transmission bandwidth. The orthogonality property among the subcarriers may allow simultaneous transmission of data from different users without interference from one other. The multiple access scheme of the OFDMA may generally be applied in various communication systems, such as those defined in IEEE standard 802.16e ("legacy system" hereafter) and IEEE standard 802.16m ("new system" hereafter). The new system defined in the IEEE standard 802.16m may be required to provide enhanced spectrum efficiency, higher speed tolerance and full backward compatibility with the legacy system defined in the IEEE standard 802.16e.

Since a communication system, either legacy or new, may have an individual frame structure for data transmission, and the legacy and new systems may operate on the same radio frequency (RF) carrier in the same channel bandwidth, it may be desirable to have a new frame structure for the legacy and new systems to coexist in a communication network while enhancing spectrum efficiency and speed tolerance.

MARK CUDAK & al.: "Combined Draft IEEE 802.16m Requirements (For Information Only)", IEEE DRAFT; C80216M-07_058, IEEE-SA, PISCATAWAY, NJ USA, vol. 802.16m, 6 March 2007, pages 1-64, describes requirements for IEEE 802.16m.

BRIEF SUMMARY OF THE INVENTION

The invention is defined in the independent claims. Advantageous embodiments are set out in the dependent claims.

Additional features and advantages of the present invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that-both the foregoing general description and the following detailed description are exemplary and explanatory only and are not restrictive of the invention, as claimed.

BRIEF DESCRIPTION OF THE SEVERAL VIEWS OF THE DRAWINGS

The foregoing summary, as well as the following detailed description-of the invention, will be better understood when read in conjunction with the appended drawings. For the purpose of illustrating the invention, there are shown in the drawings examples which are presently preferred. It should-be understood, however, that the invention is not limited to the precise arrangements and instrumentalities shown.

In the drawings:

FIG. 1 is a schematic diagram illustrating a communication system according to an example of the present invention;
FIG. 2 is a block diagram illustrating a module for constructing a frame according to an example of the present invention;
FIGS. 3A to 3E are diagrams of exemplary frame structures according to the present invention;
FIGS. 4A to 4C are diagrams of other exemplary frame structures as comparative examples;
FIGS. 5A and 5B are diagrams of still other exemplary frame structures as comparative examples; and
FIG. 6 is a flow diagram-illustrating an exemplary method of receiving a frame according to the present invention.

DETAILED DESCRIPTION OF THE INVENTION

Reference will now be made in detail to the present examples of the invention, examples of which are illustrated in the accompanying drawings. Wherever possible, the same reference numbers will be used throughout the drawings to refer to the same or like parts.

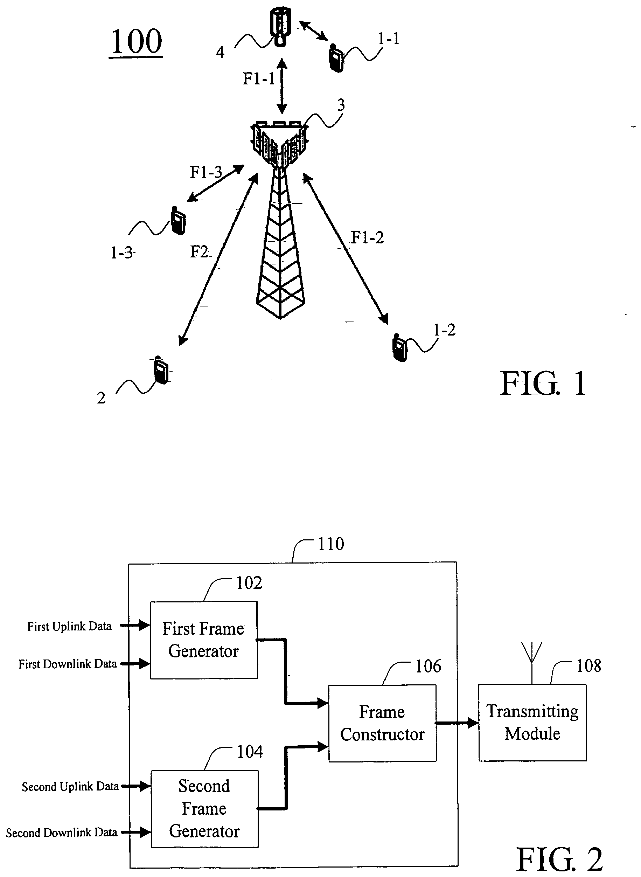

FIG. 1 is a schematic diagram illustrating a communication system 100 according to an example of the present invention. The communication system 100, for example, an orthogonal frequency division multiple access (OFDMA) system, may include a base station 3, a relay station 4, first mobile stations 1-1, 1-2 and 1-3 for communication in a legacy standard and a second mobile station 2 for communication in a new standard backward compatible with the legacy standard. The base station 3 may generate a frame comprising sub-frames F1-1, F1-2 and F1-3. Each of the sub-frames F1-1, F1-2 and F2-3 may be transmitted using, for example, one third of the channel bandwidth available for the communication system 100. The sub-frames F1-2 and F1-3 may be transmitted to the first mobile stations 1-2 and 1-3, respectively, while the sub-frame F1-1 may be transmitted from the base station 3 via the relay station 4 to the first mobile station 1-1. Moreover, a frame F2 may be generated by the base station 3 for the second mobile station 3. The frame F2 in one example may use the whole channel bandwidth of the communication system 100, and in another example may use a partial bandwidth.

The communication system 100 is able to support communications in both of a new standard and a legacy standard. With the rapid development in communication technologies, a new system or standard and a legacy system or standard may coexist in a communication network. In this case, the new standard may be backward compatible with the legacy standard. In one example according to the present invention, backward compatibility may include that a new terminal or subscriber station using a new standard may operate in a conventional network without significant impact on the performance and operation of terminals or stations relative to the conventional network. In other examples, backward compatibility may include that a legacy terminal or subscriber station using a conventional standard may operate in a new network without significant impact on the performance and operation of terminals or stations relative to the new network. Throughout the specification, a "new" system or standard may refer to an "updated," "evolved" or "next-generation" system or standard, while a "legacy" system or standard may refer to an "old" or "current" system or standard. For example, a "new" standard may be a standard that is in use as of the date of the filing of this application, and a "legacy" standard may be a standard that is in use prior to the date of the filing of this application and may be still in use for some time after the filing of this application.

FIG. 2 is block diagram illustrating a module 110 for constructing a frame according to an example of the present invention. Referring to FIG. 2, the module 110 may include a first frame generator 102, a second frame generator 104 and a frame constructor 106. The first frame generator 102 may be configured to generate a first portion of the frame for a first set of uplink and downlink data in order for communication in a first communication standard. The second frame generator 104 may be configured to generate a second portion of the frame for a second set of uplink and downlink data in order for communication in a second communication standard. In one example, the first communication standard may be a legacy standard such as the IEEE standard 802.16e, while the second communication standard may be a new standard such as the IEEE standard 802.16m. The frame constructor 106 may be configured to generate the frame, based on the first portion of the frame from the first frame generator 102 and the second portion of the frame from the second frame generator 104.

The module 110, including the first frame generator 102, the second frame generator 104 and the frame constructor 106, may be implemented in hardware or software. For example, if implemented in hardware, the module 110 may be integrated in a processor chip of an access station, for example, a base station such as the base station 3 or a relay station such as the relay station 4 illustrated in FIG. 1. Alternatively, if implemented in software, the module 110 may include executable programs or applications installed in a processor of the access station.

Furthermore, the module 110 may be electrically coupled with a transmitting module 108, which may be configured to transmit a frame from the frame constructor 106 to a receiving module (not shown). In one example, the transmitting module 108 may be capable of transmitting data in subcarriers in different radio frequency channels in, for example, an OFDMA system. Examples of frame structures will be discussed below.

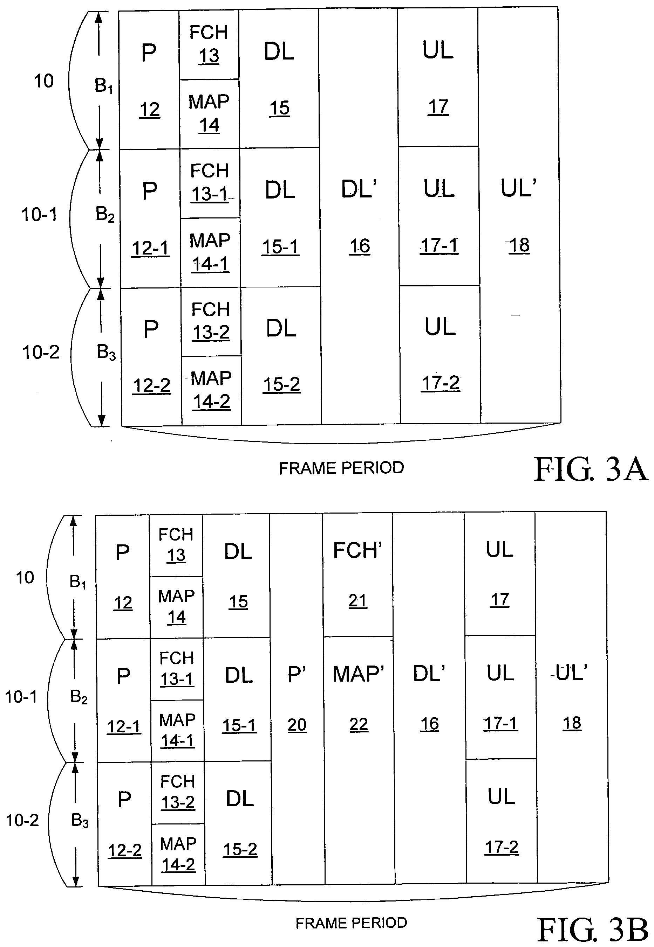

FIGS. 3A to 3E are diagrams of exemplary frame structures according to the present invention. Referring to FIG. 3A the frame may be transmitted in a frame period in contiguous bands 10, 10-1 and 10-2 having bandwidths B1 , B2 and B3, respectively. Each of the bands 10, 10-1 and 10-2 in the present example may be available for communication in the legacy standard, while a whole band composed of the bands 10, 10-1 and 10-2 may be available for communication in the new standard. Furthermore, the number of bands in a frame may not be limited to three as in the present example. Skilled persons in the art will understand that two or four or more than four bands may also be possible to suit different applications.

The first portion of the frame may include a first preamble field, a first control field and first data fields. Similarly, the second portion of the frame may include a second preamble field, a second control field and second data fields. In the present example, in the first portion of the frame, the first portion of data for transmission in the legacy standard may include preambles 12, 12-1 and 12-2 in the first preamble field, frame control headers (FCH) 13, 13-1 and 13-2 and maps (MAP) 14, 14-1 and 14-2 in the first control field, and downlink data "DL" 15, 15-1 and 15-2, and uplink data "UL" 17, 17-1 and 17-2 in the first data fields. Furthermore, in the second portion of the frame, the second portion of data for transmission in the new standard may include downlink data "DL'" 16 and uplink data "UL'" 18 in the second data fields. Moreover, the preamble 12, FCH 13, MAP 14, DL 15 and UL 17 may be transmitted in the band 10 via a first channel, the preamble 12-1, FCH 13-1, MAP 14-1, DL 15-1 and UL 17-1 may be transmitted in the band 10-1 via a second channel, and the preamble 12-2, FCH 13-2, MAP 14-2, DL 15-2 and UL 17-2 may be transmitted in the band 10-2 via a third channel. Generally, the bandwidth for data transmission in the new standard may be greater than that for data transmission in the legacy standard. In the present example, the second portion of data-DL' 16 and UL' 18 may be transmitted in the whole band having a bandwidth equal to B1 + B2 + B3.

In the frame, the preambles 12, 12-1 and 12-2 may include information on synchronization and may be used to transmit a synchronization signal for synchronization acquisition in a transmission/reception duration.

Furthermore, the FCHs 13,13-1 and 13-2 may include information on sub-channels, ranging and a modulation or encoding method. Moreover, the MAPs 14, 14-1 and 14-2 may include information on the locations of the first and second portions of data. Taking the band 10 as an example, the preamble 12 may include first synchronization information for the DL 15 and UL 17, the FCH 13 may include information about demodulation or decoding of MAP 14, and the MAP 14 may include information on the locations of DL 15 and UL 17 in the frame. Similarly, for the band 10-1, the preamble 12-1 may include first synchronization information for the DL 15-1 and UL 17-1, the FCH 13-1 may include information about demodulation or decoding of MAP 14-1, and the MAP 14-1 may include information on the locations of DL 15-1 and UL 17-1 in the frame. Similarly, for the band 10-2, the preamble 12-1 may include first synchronization information for the DL 15-2 and UL 17-2, the FCH 13-2 may include information about demodulation or decoding of MAP 14-2, and the MAP 14-2 may include information on the locations of DL 15-2 and UL 17-2 in the frame.

Furthermore, at least one of the preamble 12, 12-1 or 12-2 may include second synchronization information for the second portion of data DL' 16 and UL' 18, and at least one of the MAP 14, 14-1 or 14-2 may include information on the locations of the DL' 16 and UL' 18 in the frame.

In the present example, the FCHs 13, 13-1 and 13-2 and the MAPs 14, 14-1 and 14-2 may be transmitted before the first and second portions of data. Moreover, the FCHs 13, 13-1 and 13-2 and the MAPs 14, 14-1 and 14-2 may be transmitted or received at the same time. Those skilled in the art can easily understand that a control filed may include but is not limited to FCHs and MAPs, and other arrangements of the FCHs and MAPs may be possible to suit different applications.

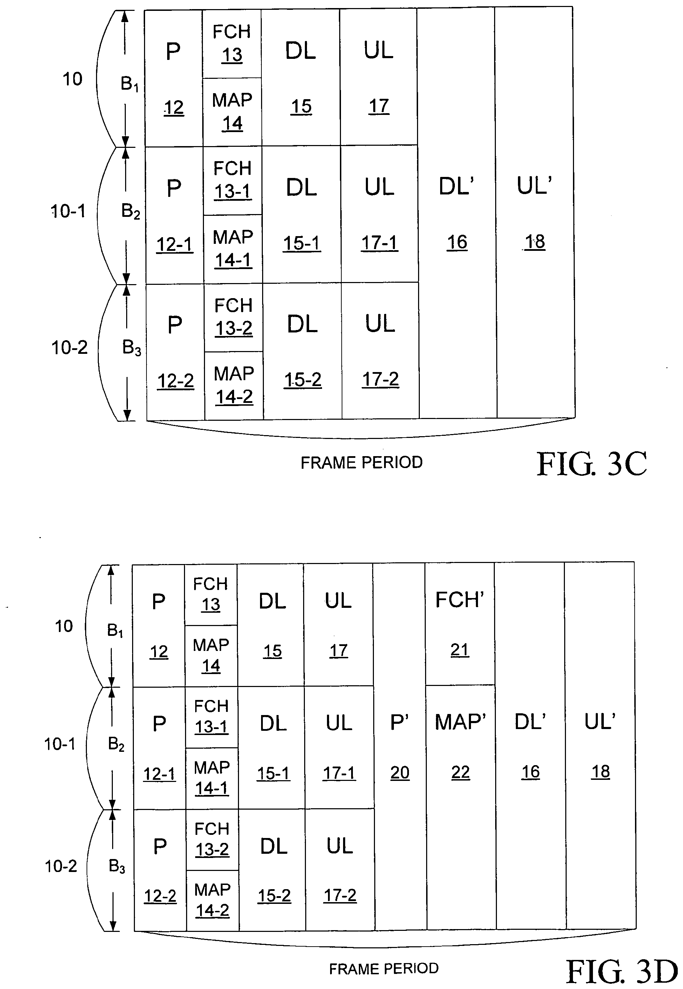

Referring to FIG. 3B, the frame structure may be similar to that described and illustrated with reference to FIG. 3C except that, for example, a second preamble field and a second control field may be provided. Specifically, a preamble 20 in the second preamble field, and FCH' 21 and MAP' 22 in the second control field may be added. Furthermore, the preamble 20 may include second synchronization information for the second portion of data DL' 16 and UL' 18, the FCH' 21 may include information about the demodulation or decoding of MAP' 22, and the MAP' 22 may include information on the locations of the DL' 16 and UL' 18 in the frame.

Referring to FIG. 3C, the frame structure may be similar to that described and illustrated with reference to FIG. 3A except that, for example, each of the first and second data fields forms an integral portion in the frame. Specifically, the uplink data UL 17, 17-1, 17-2 may be positioned in front of the DL' 16. Accordingly, the first portion of data may be transmitted before the second portion of data. Unlike the first or second portion of data illustrated in FIGS. 3A and 3B that is allocated in separate frame zones of the frame, in the present example, the first portion of data is arranged in one frame zone, while the second portion of data is arranged in another frame zone of the frame.

Referring to FIG. 3D, the frame structure may be similar to that described and illustrated with reference to FIG. 3B except that, for example, each of the first and second portions of the frame forms an integral portion in the frame. Specifically, the uplink data UL 17, 17-1, 17-2 may be positioned in front of the preamble 20. Accordingly, the first portion of data may be transmitted before the second portion of data. In the present example, the first portion of data is arranged in one frame zone, while the second portion of data is arranged in another frame zone of the frame.

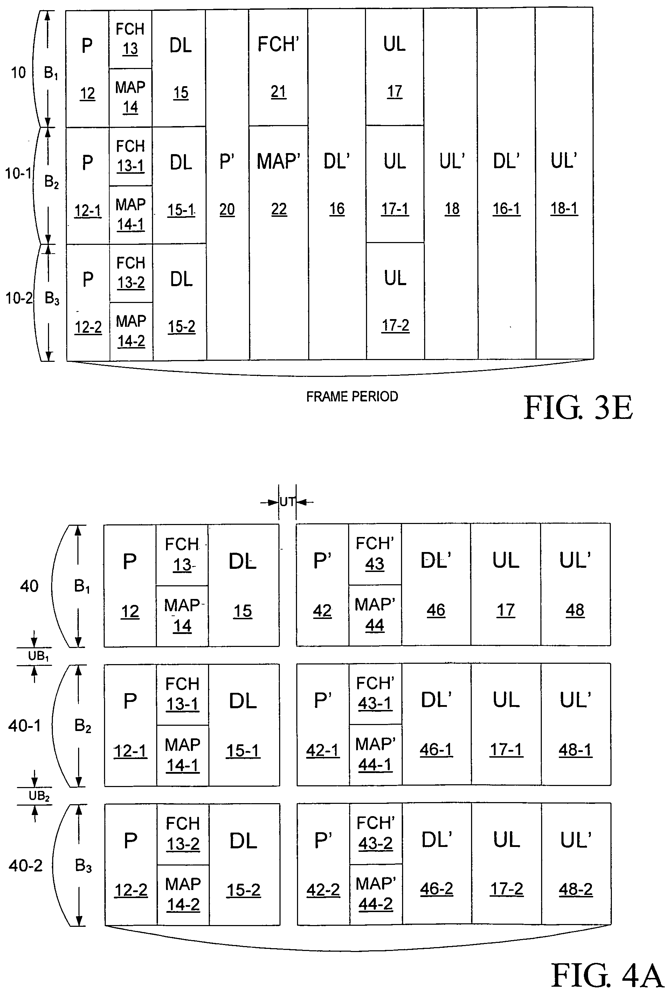

Referring to FIG. 3E, the frame structure may be similar to that described and illustrated with reference to FIG. 3B except that, for example, additional second data fields may be added for downlink data DL' 16-1 and uplink data UL' 18-1. Accordingly, the frame may be used to transmit multiple pairs of data, i.e., a first data pair DL' 16 and UL' 18 and a second data pair DL' 16-1 and UL' 18-1, in the new standard using the whole band.

FIGS. 4A to 4C are diagrams of other exemplary frame structures shown as comparative examples. Referring to FIG. 4A, the frame structure may be similar to that described and illustrated with reference to FIG. 3B except, for example, bands 40, 40-1 and 40-2. Specifically, unlike the contiguous bands 10, 10-1 and 10-2 illustrated in FIG. 3B, the bands 40, 40-1 and 40-2 are discontiguous and may be separated by unused bands UB1 and UB2 . Furthermore, a second preamble field including second preambles 42, 42-1 and 42-2 may be transmitted after a period of time "UT." Downlink data DL' 46, 46-1 and 46-2 and uplink data UL' 48, 48-1 and 48-2 may be transmitted to a single mobile station or a same user in the bands B 1 , B2 and B3 , respectively. In one example, one of the second preambles 42, 42-1 and 42-2 may include synchronization information for the transmission of DL' 46, 46-1, 46-2 and UL' 48, 48-1, 48-2. In this case, one of second control fields related to the one preamble may be decoded to identify the locations of DL' 46, 46-1, 46-2 and UL' 48, 48-1 and 48-2. In another example, the second preambles 42, 42-1 and 42-2 may include synchronization information for the transmission of their respective downlink data DL' and uplink data UL'. In this case, the second control fields FCHs 43, 43-1, 43-2 and MAPs 44, 44-1, 44-2 may be decoded to identify the locations of their respective DL' and UL'.

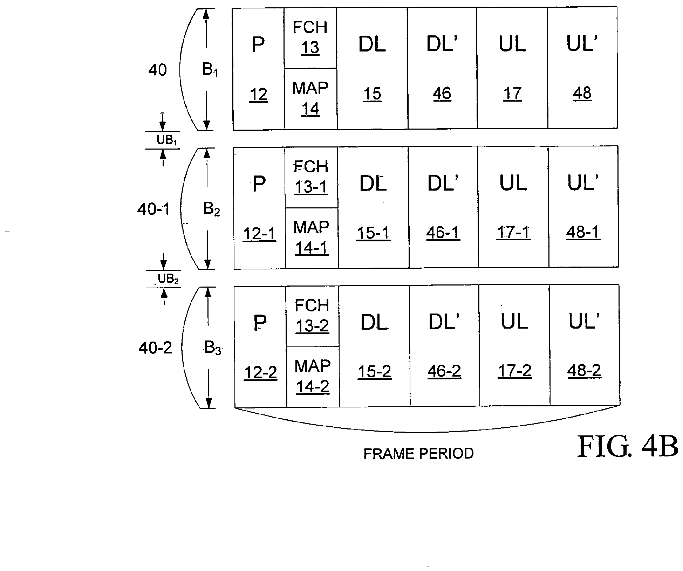

Referring to FIG. 4B, the frame structure may be similar to that described and illustrated with reference to FIG. 4A except that, for example, the second preamble field and the second control field may be eliminated. In one example, one of the first preambles 12, 12-1 and 12-2 may include synchronization information for the transmission of DL' 46,46-1, 46-2- and UL' 48, 48-1, 48-2. In this case, one of the first control fields related to the one preamble may be decoded to identify the locations of DL' 46, 46-1, 46-2 and UL' 48, 48-1 and 48-2. In another example, the first preambles 12, 12-1 and 12-2 may include synchronization information for the transmission of their respective downlink data DL' and uplink data UL'. In this case, the first control fields FCHs 13, 13-1, 13-2 and MAPs 14, 14-1, 14-2 may be decoded to identify-the locations of their respective DL' and UL'.

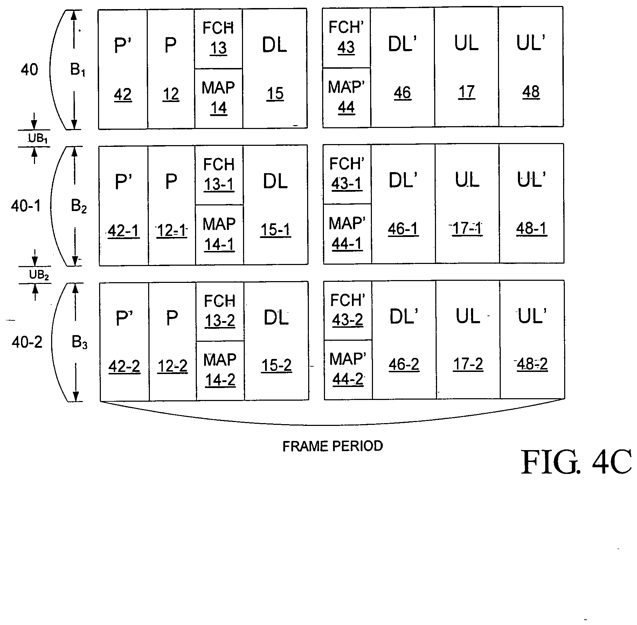

Referring to FIG. 4C, the frame structure may be similar to that described and illustrated with reference to FIG. 4A except that, for example, the second preamble field may be positioned in front of the first preamble field.

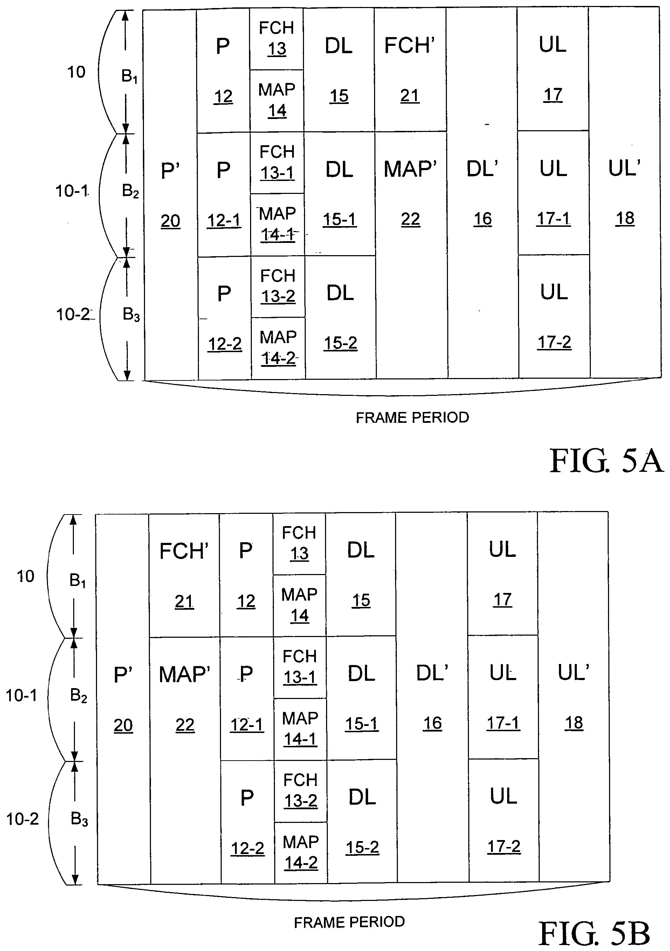

FIGS. 5A and 5B are diagrams of still other exemplary frame structures. Referring to FIG. 5A, the frame structure may be similar to that described and illustrated with reference to FIG. 3B except that, for example, the second preamble field may be positioned in front of the first preamble field. Generally, a frame may be provided with one first preamble field. The second preamble field, however, may not be provided in each frame. In one example, approximately every two frames may be provided with one second preamble field.

Referring to FIG. 5B, the frame structure may be similar to that described and illustrated with reference to FIG. 5A except that, for example, the second preamble field and the second control field may be positioned in front of the first preamble field.

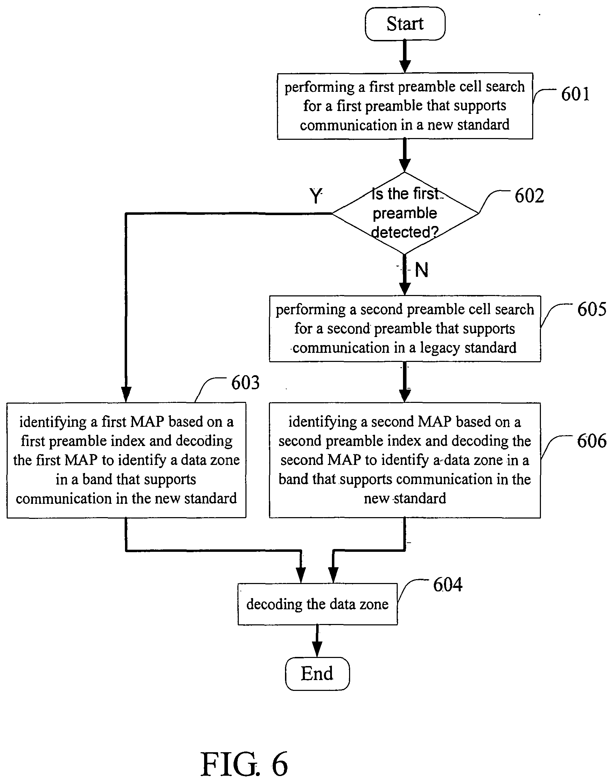

FIG. 6 is a flow diagram illustrating an exemplary method of receiving a frame according to the present invention. The frame may have a frame structure similar to one described and illustrated in FIGS. 3 to 6. A first mobile station such as the first mobile station 1-1, 1-2 or 1-3 illustrated in FIG. 1 may perform a preamble cell search in the wireless communication system 100. A legacy preamble for communication in the legacy standard may be detected by the first mobile station. Next, a legacy FCH/MAP related to the legacy preamble may be decoded and then a data zone may be identified. As to a second mobile station such as the second mobile station 2 illustrated in FIG. 1, to identify a data zone, the method illustrated in FIG. 6 may be used. Referring to FIG. 6, at step 601, the second mobile station may perform a first preamble cell search for a first preamble that supports communication in the new standard.

In one example, the first preamble may be transmitted in a band having a bandwidth

$$BW = \sum_{i=1}^{L} B_i$$ , where L is the number of bands in the wireless communication system, $B_i$ is the bandwidth of an i-th band of the L bands-and the i-th band may individually serve communication in the legacy standard. In this case, the i-th band may be similar to one of the contiguous bands 10, 10-1 and 10-2 illustrated in FIG. 3B, for example, while the first preamble may be similar to the preamble 20 in FIG. 4B.

In another example, the first preamble may be transmitted in a j-th band having a bandwidth $B_j$ in the L bands and the j-th band may-individually-serve communication in both the legacy and new standards. In this case, the j-th band may be similar to one of the discontiguous bands 40, 40-1 and 40-2 illustrated in FIG. 4A, for example, while the first preamble may be similar to one of the preambles 40, 40-1 and 40-2 in FIG. 4B.

- If at step 602 a such first preamble is detected, at step 603, a first MAP may be identified based on a preamble index in the first preamble and the first MAP may be decoded so as to identify a data zone in a frame to which the first preamble is related. The data zone may then be decoded at step 604.

If at step 602 no such first preamble is detected, then at step 605, a second preamble cell search for a second preamble that supports communication in the legacy standard may be performed. Subsequently, at step 606, a second MAP may be identified based on a second preamble index in the second preamble and the second MAP may be decoded so as to identify a data zone in a frame to which the second preamble is related. The data zone may then be decoded at step 604.

It will be appreciated by those skilled in the art that changes could be made to the examples described above without departing from the broad inventive concept thereof. It is understood, therefore, that this invention is not limited to the particular examples disclosed, but it is intended to cover modifications within the scope of the present invention as defined by the appended claims.

## Claims

1. A module (110) for constructing a frame for communication in a communication system that supports a new standard and a legacy standard, the new standard being backward compatible with the legacy standard, wherein communication systems that support the new standard have different frame structures for data transmission than communication systems that support only the legacy standard, the module comprising:

    a first frame generator (102) configured to generate a first portion of the frame, the first portion of the frame to support a first set of data to be transmitted according to the legacy standard in each of a plurality of first bands;
    a second frame generator (104) configured to generate a second portion of the frame, the second portion of the frame to support a second set of data to be transmitted according to the new standard in a second band composed of the first bands, wherein the second portion of the frame includes at least one second data field; and
    a frame constructor (106) configured to construct the frame based on the first portion of the frame from the first frame generator and the second portion of the frame from the second frame generator;

the first portion of the frame successively includes a first preamble field, a first control field and a legacy data field in each first band, a frame control header and a MAP field in the first control field in each first band, wherein the MAP field includes information on the location of the at least one second data field in the frame;

the second portion of the frame includes the second set of data;

the second set of data only includes new downlink data and/or uplink data, and

the second set of data is appended to the first set of data,

wherein the legacy standard is IEEE standard 802.16e and the new standard is IEEE standard 802.16m.

2. The module of claim 1, wherein the legacy data fields are arranged in one integral zone of the frame and the second set of data is arranged in another integral zone of the frame.

3. The module of claim 1, wherein in each of the first bands, the first control data field includes information on the location of the legacy data field in the frame.

4. A method for constructing a frame for communication in a communication system that supports a new standard and a legacy standard, the new standard being backward compatible with the legacy standard, wherein communication systems that support the new standard have different frame structures for data transmission than communication systems that support only the legacy standard, the method comprising:

forming a first portion of the frame, the first portion of the frame to support a first set of data to be transmitted according to the legacy standard in each of a plurality of first bands;

forming a second portion of the frame, the second portion of the frame to support a second set of data to be transmitted according the new standard in a second band composed of the first bands, wherein the second portion of the frame includes at least one second data field; and

constructing the frame based on the first portion of the frame from a first frame generator and the second portion of the frame from a second frame generator;

the first portion of the frame successively includes a first preamble field, a first control field and a legacy data field in each first band, a frame control header and a MAP field in the first control field in each first band, wherein the MAP field includes information on the location of the at least one second data field in the frame;

the second portion of the frame includes the second set of data;

the second set of data includes only new downlink data and/or uplink data, and

the second set of data is appended to the first set of data,

wherein the legacy standard is IEEE standard 802.16e and the new standard is IEEE standard 802.16m.

5. The method of claim 4 further comprising arranging the legacy data fields in one integral zone of the frame and arranging the second set of data in another integral zone of the frame.

6. The method of claim 4 further comprising, after receiving a frame constructed in the previous method steps, a step of decoding in at least one of the bands, the first control field to identify the location of the at least one legacy data field in the frame at a receiver.

7. The method of claim 4 further comprising, after receiving a frame constructed in the previous method steps, a step of decoding in at least one of the bands, the first control field to identify the location of the new data fields in the frame at a receiver.

**Patentansprüche**

1. Modul (110) zum Aufbau eines Rahmens für die Kommunikation in einem Kommunikationssystem, das einen neuen Standard und einen älteren Standard unterstützt, wobei der neue Standard abwärtskompatibel mit dem älteren Standard ist, wobei Kommunikationssysteme, die den neuen Standard unterstützen, andere Rahmenstrukturen für die Datenübertragung aufweisen als Kommunikationssysteme, die nur den älteren Standard unterstützen, wobei das Modul umfasst:

einen ersten Rahmengenerator (102), der so konfiguriert ist, dass er einen ersten Teil des Rahmens erzeugt, wobei der erste Teil des Rahmens einen ersten Satz von Daten unterstützt, die gemäß dem älteren Standard in jedem einer Vielzahl von ersten Bändern zu übertragen sind; einen zweiten Rahmengenerator (104), der so konfiguriert ist, dass er einen zweiten Teil des Rahmens erzeugt, wobei der zweite Teil des Rahmens einen zweiten Satz von Daten unterstützt, die gemäß dem neuen Standard in einem zweiten Band, das aus den ersten Bändern zusammengesetzt ist, zu übertragen sind, wobei der zweite Teil des Rahmens mindestens ein zweites Datenfeld enthält; und

einen Rahmengenerator (106), der so konfiguriert ist, dass er die Rahmen auf der Grundlage des ersten Teils des Rahmens vom ersten Rahmengenerator und des zweiten Teils des Rahmens vom zweiten Rahmengenerator aufbaut; der erste Teil des Rahmens nacheinander ein erstes Präambelfeld, ein erstes Steuerfeld und ein Legacy-Datenfeld in jedem ersten Band, einen Rahmen-Steuer-Header und ein MAP-Feld im ersten Steuerfeld in jedem ersten Band umfasst, wobei das MAP-Feld Informationen über die Position des mindestens einen zweiten Datenfelds im Rahmen enthält; der zweite Teil des Rahmens den zweiten Datensatz enthält; der zweite Datensatz nur neue Downlink-Daten und/oder Uplink-Daten enthält, und der zweite Datensatz an den ersten Datensatz angehängt wird, wobei der alte Standard der IEEE-Standard 802.16e und der neue Standard der IEEE-Standard 802.16m ist.

2. Modul nach Anspruch 1, wobei die Legacy-Datenfelder in einer integralen Zone des Rahmens angeordnet sind und der zweite Datensatz in einer anderen integralen Zone des Rahmens angeordnet ist.

3. Modul nach Anspruch 1, wobei in jedem der ersten Bänder das erste Steuerdatenfeld Informationen über die Position des Legacy-Datenfeldes im Rahmen enthält.

4. Verfahren zum Aufbau eines Rahmens für die Kommunikation in einem Kommunikationssystem, das einen neuen Standard und einen älteren Standard unterstützt, wobei der neue Standard abwärtskompatibel mit dem älteren Standard ist, wobei Kommunikationssysteme, die den neuen Standard unterstützen, andere Rahmenstrukturen für die Datenübertragung aufweisen als Kommunikationssysteme, die nur den älteren Standard unterstützen, wobei das Verfahren umfasst:

Bilden eines ersten Teils des Rahmens, wobei der erste Teil des Rahmens einen ersten Satz von Daten unterstützt, die gemäß dem älteren Standard in jedem einer Vielzahl von ersten Bändern zu übertragen sind; Bilden eines zweiten Teils des Rahmens, wobei der zweite Teil des Rahmens einen zweiten Satz von Daten unterstützt, die gemäß dem neuen Standard in einem zweiten Band, das aus den ersten Bändern zusammengesetzt ist, zu übertragen sind, wobei der zweite Teil des Rahmens mindestens ein zweites Datenfeld umfasst; und Aufbauen des Rahmens auf der Grundlage des ersten Teils des Rahmens aus einem ersten Rahmengenerator und des zweiten Teils des Rahmens aus einem zweiten Rahmengenerator; der erste Teil des Rahmens umfasst nacheinander ein erstes Präambelfeld, ein erstes Steuerfeld und ein Legacy-Datenfeld in jedem ersten Band, einen Rahmen-Steuer-Header und ein MAP-Feld im ersten Steuerfeld in jedem ersten Band, wobei das MAP-Feld Informationen über die Position des mindestens einen zweiten Datenfelds im Rahmen enthält; der zweite Teil des Rahmens den zweiten Datensatz enthält; der zweite Datensatz nur neue Downlink-Daten und/oder Uplink-Daten enthält, und der zweite Datensatz an den ersten Datensatz angehängt wird, wobei der alte Standard der IEEE-Standard 802.16e und der neue Standard der IEEE-Standard 802.16m ist.

5. Verfahren nach Anspruch 4, das ferner das Anordnen der Legacy-Datenfelder in einer integralen Zone des Rahmens und das Anordnen des zweiten Datensatzes in einer anderen integralen Zone des Rahmens umfasst.

6. Verfahren nach Anspruch 4, das ferner nach dem Empfang eines in den vorherigen Verfahrensschritten aufgebauten Rahmens einen Schritt des Decodierens in mindestens einem der Bänder des ersten Steuerfeldes umfasst, um die Position des mindestens einen Legacy-Datenfeldes im Rahmen an einem Empfänger zu identifizieren.

7. Verfahren nach Anspruch 4, das ferner nach dem Empfang eines in den vorhergehenden Verfahrensschritten aufgebauten Rahmens einen Schritt zum Decodieren des ersten Steuerfelds in mindestens einem der Bänder umfasst, um die Position der neuen Datenfelder im Rahmen an einem Empfänger zu identifizieren.

**Revendications**

1. Module (110) destiné à construire une trame pour la communication dans un système de communication prenant en charge une nouvelle norme et une norme héritée, la nouvelle norme étant rétrocompatible avec la norme héritée, dans lequel les systèmes de communication prenant en charge la nouvelle norme présentent des structures de trame différentes pour la transmission de données par rapport aux systèmes de communication prenant uniquement en charge la norme héritée, le module comprenant:

un premier générateur de trames (102) configuré pour générer une première partie de la trame, ladite première partie de la trame étant destinée à prendre en charge un premier ensemble de données à transmettre selon la norme héritée dans chacune d'une pluralité de premières bandes;

un deuxième générateur de trames (104) configuré pour générer une deuxième partie de la trame, la deuxième partie de la trame étant destinée à prendre en charge un deuxième ensemble de données à transmettre selon la nouvelle norme dans une deuxième bande composée des premières bandes, dans lequel la deuxième partie de la trame comprend au moins un deuxième champ de données; et

un constructeur de trame (106) configuré pour construire la trame sur la base de la première partie de la trame provenant du premier générateur de trame et de la deuxième partie de la trame provenant du deuxième générateur de trame;

la première partie de la trame comprend successivement un premier champ de préambule, un premier champ de contrôle et un champ de données héritées dans chaque première bande, un en-tête de contrôle de trame et un champ MAP dans le premier champ de contrôle de chaque première bande, dans lequel le champ MAP comprend des informations sur l'emplacement du au moins un deuxième champ de données dans la trame;

la deuxième partie de la trame comprend le deuxième ensemble de données;

le deuxième ensemble de données comprend uniquement de nouvelles données de liaison descendante et/ou de liaison montante, et

le deuxième ensemble de données est ajouté au premier ensemble de données,

dans lequel la norme héritée est la norme IEEE 802.16e et la nouvelle norme est la norme IEEE 802.16m.

2. Module selon la revendication 1, dans lequel les champs de données hérités sont disposés dans une zone intégrale de la trame et le deuxième ensemble de données est disposé dans une autre zone intégrale de la trame.

3. Module selon la revendication 1, dans lequel, dans chacune des premières bandes, le premier champ de données de contrôle comprend des informations sur l'emplacement du champ de données hérité dans la trame.

4. Procédé de construction d'une trame pour la communication dans un système de communication prenant en charge une nouvelle norme et une norme héritée, la nouvelle norme étant rétrocompatible avec la norme héritée, dans lequel les systèmes de communication prenant en charge la nouvelle norme ont des structures de trame différentes pour la transmission de données par rapport aux systèmes de communication prenant uniquement en charge la norme héritée, le procédé comprenant:

la formation d'une première partie de la trame, la première partie de la trame étant destinée à prendre en charge un premier ensemble de données à transmettre selon la norme héritée dans chacune d'une pluralité de premières bandes;

la formation d'une deuxième partie de la trame, ladite deuxième partie de la trame étant destinée à prendre en charge un deuxième ensemble de données à transmettre selon la nouvelle norme dans une deuxième bande composée des premières bandes, dans laquelle la deuxième partie de la trame comprend au moins un deuxième champ de données; et

la construction de la trame à partir de la première partie de la trame provenant d'un premier générateur de trames et de la deuxième partie de la trame provenant d'un deuxième générateur de trames;

la première partie de la trame comprend successivement un premier champ de préambule, un premier champ de contrôle et un champ de données héritées dans chaque première bande, un en-tête de contrôle de trame et un champ MAP dans le premier champ de contrôle dans chaque première bande, le champ MAP comprenant des informations sur l'emplacement du au moins un deuxième champ de données dans la trame;

la deuxième partie de la trame comprend le deuxième ensemble de données ;

le deuxième ensemble de données comprend uniquement de nouvelles données de liaison descendante et/ou de liaison montante, et

le deuxième ensemble de données est ajouté au premier ensemble de données,

dans lequel la norme héritée est la norme IEEE 802.16e et la nouvelle norme est la norme IEEE 802.16m.

5. Procédé selon la revendication 4, comprenant en outre l'agencement des champs de données hérités dans une zone intégrale de la trame et l'agencement du deuxième ensemble de données dans une autre zone intégrale de la trame.

6. Procédé selon la revendication 4, comprenant en outre, après réception d'une trame construite lors des étapes précédentes du procédé, une étape de décodage, dans au moins l'une des bandes, du premier champ de contrôle afin d'identifier l'emplacement du au moins un champ de données hérité dans la trame dans un récepteur.

7. Procédé selon la revendication 4, comprenant en outre, après réception d'une trame construite lors des étapes précédentes du procédé, une étape consistant à décoder, dans au moins l'une des bandes, le premier champ de contrôle afin d'identifier l'emplacement des nouveaux champs de données dans la trame dans un récepteur.

<u>100</u>

FIG. 1

FIG. 2

FRAME PERIOD

FIG. 3A

FRAME PERIOD

FIG. 3B

FRAME PERIOD

FIG. 3C

FRAME PERIOD

FIG. 3D

FRAME PERIOD

**FIG. 3E**

UT

**FIG. 4A**

FRAME PERIOD      FIG. 4B

FRAME PERIOD

FIG. 4C

FRAME PERIOD

## FIG. 5A

FRAME PERIOD

## FIG. 5B

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 92979807

**Non-patent literature cited in the description**

- Combined Draft IEEE 802.16m Requirements (For Information Only). **MARK CUDAK**. IEEE DRAFT. IEEE-SA, 06 March 2007, vol. 802, 1-64